# EUROPÄISCHE PATENTSCHRIFT

(11) **EP 0 702 177 B1**
(45) Veröffentlichungstag und Bekanntmachung des Hinweises auf die Patenterteilung: **02.06.1999**
(21) Anmeldenummer: 95110597.2
(22) Anmeldetag: 07.07.1995
(51) Int. Cl.: F16K 31/60, F16K 35/02

(54) **Absperrklappe**
Butterfly valve
Robinet à papillon

(30) Priorität: 13.09.1994 DE 9414841 U
(43) Veröffentlichungstag der Anmeldung: 20.03.1996
(73) Patentinhaber: ARI-ARMATUREN ALBERT RICHTER GmbH & Co.KG., 33758 Schloss Holte-Stukenbrock (DE)
(72) Erfinder: Steen, Dieter, Dipl.-Ing., D-33615 Bielefeld (DE); Kröker, Heinrich, D-33758 Schloss Holte-Stukenbrock (DE)
(74) Vertreter: Stracke, Alexander, Dipl.-Ing.

(56) Entgegenhaltungen:
- WO-A-90/01650
- DE-A- 3 304 540

## Beschreibung

Die vorliegende Erfindung betrifft eine Absperrklappe gemäß dem Oberbegriff des Anspruches 1.

Mit Hilfe des Handhebels wird ein Abschlußkörper betätigt, mit dem eine Durchflußmengenregulierung steuerbar ist.

Dabei kann der Handhebel entsprechend der Verteilung der Rastöffnungen in bestimmten Stellungen arretiert werden.

Vielfach besteht aber auch die Notwendigkeit, eine stufenlose Verstellung des Handhebels bzw. des Abschlußkörpers zu ermöglichen, um so eine feinere Mengenregulierung zu erreichen.

Bislang ist es hierzu erforderlich, das Zwischenstück zusammen mit dem Handhebel von der Absperrklappe im übrigen zu lösen und durch einen solchen Handhebel zu ersetzen, mit dem eine stufenlose Mengenregulierung möglich ist.

Dieses Demontieren des einen Handhebels und Montieren des anderen ist naturgemäß recht umständlich und zeitaufwendig, was einem einfachen Betrieb der Absperrklappe insgesamt entgegensteht.

Überdies ist für jeden Handhebel ein eigenes Zwischenstück vorgesehen, so daß neben der lagermäßigen Vorhaltung unterschiedlicher Handhebel auch eine Lagerung verschiedener Zwischenstücke notwendig ist.
Hieraus ergeben sich, insbesondere in wirtschaftlicher Hinsicht, weitere Nachteile.

Der vorliegenden Erfindung liegt daher die Aufgabe zugrunde, eine Absperrklappe der gattungsgemäßen Art so zu gestalten, daß die Handhabung beim Wechsel von einem Handhebel auf den anderen vereinfacht und die Lagerhaltung der notwendigen Bauteile kostengünstiger wird.

Diese Aufgabe wird durch eine Absperrklappe gelöst, die die Merkmale des Anspruches 1 aufweist.

Durch diese konstruktive Maßnahme besteht nun die Möglichkeit, das Zwischenstück sowohl für einen Handhebel im Sinne eines Rasthebels als auch für einen Handhebel im Sinne eines Klemmhebels einzusetzen.
Ein Austauschen des zwischenstückes bei einem Wechsel des Handhebels, d.h. wenn ein Rasthebel durch einen Klemmhebel ersetzt werden soll, ist nicht mehr erforderlich, so daß sich daraus eine wesentliche Vereinfachung des Wechselvorgangs ergibt.

Darüber hinaus ist eine Lagerhaltung verschiedener Zwischenstücke gleichfalls nicht mehr notwendig.

Es besteht die Möglichkeit, den Handhebel komplett auszutauschen, wenn der Rasthebel und der Klemmhebel unterschiedlich ausgebildet sind. Dabei hat dann der Klemmhebel einen nasenförmigen Ansatz, in dem die Klemmeinrichtung, beispielsweise in Form einer Klemmschraube, festgelegt ist, die korrespondierend mit einer Klemmutter in das Langloch eingreift.
In diesem Fall ist eine Rastnase, die in die Rastöffnungen eingreift, wie sie beim Rasthebel vorgesehen ist, nicht erforderlich.
Bei einem Rasthebel hingegen ist dann natürlich der nasenförmige Ansatz zur Aufnahme der Klemmschraube überflüssig.

Anstelle zweier verschiedener Handhebel kann auch ein Handhebel vorgesehen sein, der eine Rastnase aufweist, die bei Verwendung als Klemmhebel außer Eingriff ist und bei dem der nasenförmige Ansatz als eigenes Teil, wenn der Handhebel als Klemmhebel benutzt werden soll, eingesetzt wird.

Zweckmäßigerweise ist in diesem Fall der Handhebel um 180° versetzt zu befestigen, wobei das Zwischenstück auf der den Rastöffnungen zugewandten Seite einen größeren Radius aufweist als auf der gegenüberliegenden Seite, so daß der Klemmhebel dann frei schwenkbar ist.

Nach einer weiteren vorteilhaften Ausgestaltung der Erfindung ist vorgesehen, daß das Langloch bei Nichtgebrauch abgedeckt ist. Hierdurch wird verhindert, daß Schmutz eindringen und die Funktionsfähigkeit beeinträchtigen kann.

Bei Gebrauch des Langloches, also dann, wenn der Handhebel als Klemmhebel eingesetzt werden soll, wird die Abdeckung entfernt. Die Abdeckung kann, wenn das Zwischenstück als Kunststoffspritzteil ausgebildet ist, durch eine dünnwandige Sollbruchstelle gebildet sein, die durch ein geeignetes Werkzeug, beispielsweise einen Schraubendreher, ausgebrochen werden kann.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1 und 2: jeweils einen Teilausschnitt einer erfindungsgemäßen Absperrklappe in einer Seitenansicht,
- Fig. 3: eine Draufsicht auf die Absperrklappe nach der Fig. 2.

In den Figuren ist das Oberteil einer Absperrklappe 1 gezeigt, auf dem ein ortsfestes Zwischenstück 2 befestigt ist. An diesem Zwischenstück 2 ist ein Handhebel 3 gelagert, mit dem ein nicht dargestellter Abschlußkörper betätigbar ist. Dabei ist ist der Handhebel 3 drehbar.

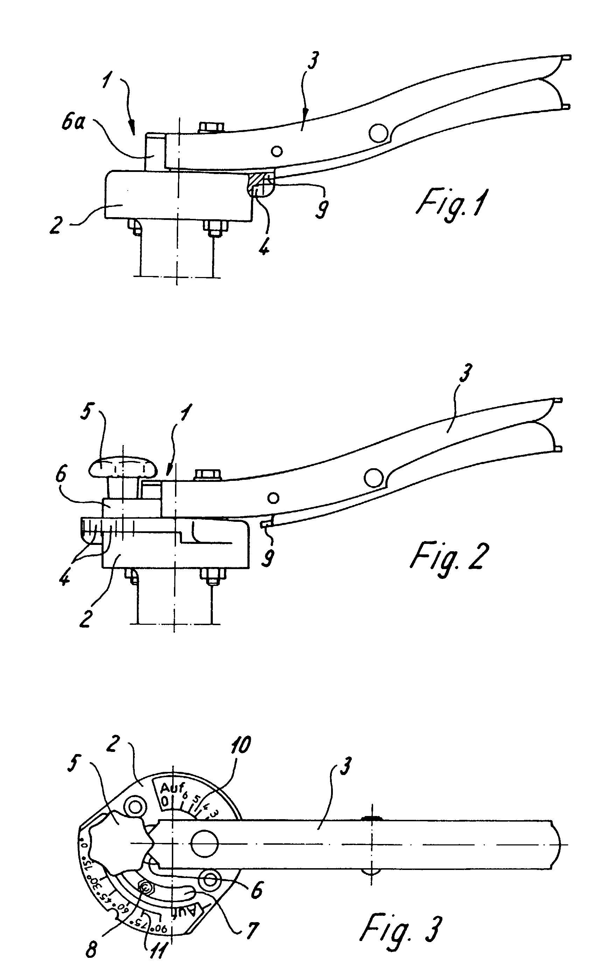

Entsprechend der Fig. 1 ist der Handhebel 3 als Rasthebel ausgebildet, der eine Rastnase 9 aufweist, die in Rastöffnungen 4 des Zwischenstückes 2 in unterschiedlichen Arretierstellungen festsetzbar ist.

Vorzugsweise sind die Rastöffnungen 4 in gleichem Abstand zueinander angeordnet, wobei die Abstände durch eine Teilstrichskalierung 10 (Fig. 3) markiert sind.
Eine beispielsweise mit einer Spitze versehene Nase 6a, die in dem Handhebel 3 festgelegt ist, übernimmt eine Zeigerfunktion, mit der die Stellung des Handhebels 3 bzw. des Abschlußkörpers auf der Skalierung 10 ablesbar ist.

Um den Handhebel 3, der, wie erwähnt, gemäß der Fig. 1 als Rasthebel ausgebildet ist, in eine Funktion als Klemmhebel zu bringen, wie er in der Fig. 2 dargestellt ist, wird er aus seiner Verbindung mit dem Zwischenstück 2 gelöst, um 180° gedreht und in dieser Position wieder mit dem Zwischenstück 2 verbunden. Zuvor wird die Nase 6a gegen eine Nase 6 ausgetauscht, die einen Durchgang für eine mit einem Sternkopf versehene Klemmschraube 5 aufweist.

Diese Klemmschraube 5 ist in eine Klemmutter 8 eindrehbar, die in einem kreisbogenförmigen Langloch 7 verdrehsicher geführt ist, so daß der Handhebel 3 in jeder Position innerhalb des durch das Langloch 7 begrenzten Schwenkbereichs festklemmbar ist.

Da die Nase 6 gleichfalls mit einer Zeigerspitze versehen ist, kann die Stellung des Handhebels 3 bzw. des Abschlußkörpers an einer auf dem Zwischenstück 2 in Winkelbereichen eingeteilten Skalierung 11, auf die das zeigerförmige Ende der Nase 6 weist, abgelesen werden.

Bei entsprechender Ausbildung des Handhebels 3, d.h. bei einer gegebenen Möglichkeit, die Rastnase 9 außerhalb einer Korrespondenzmöglichkeit mit den Rastöffnungen 4 zu bringen, ist es denkbar, die im vorliegenden Ausführungsbeispiel unterschiedlich ausgebildeten, separaten Nasen 6,6a als ein Stück herzustellen, wobei dann für den Einsatz des Handhebels als Klemmhebel die Klemmschraube 5 zum Einsatz kommt. Ein Umsetzen des Handhebels 3 wäre dann nicht erforderlich. Ebenso müßten in diesem Fall die Skalierungen 10,11 auf einer Seite des Zwischenstückes 2 vorgesehen sein.

## Patentansprüche

1. Absperrklappe mit einem drehbaren Handhebel, der auf einem mit Rastöffnungen versehenen ortsfesten Zwischenstück gelagert ist,
**dadurch gekennzeichnet,** daß der Handhebel in eine Funktion als Klemmhebel bringbar ist, wobei das Zwischenstück (2) ein kreisbogenförmiges Langloch (7) aufweist, in dem eine mit dem Handhebel (3) verbundene Klemmeinrichtung klemmbar geführt ist.

2. Absperrklappe nach Anspruch 1, dadurch gekennzeichnet, daß die Klemmeinrichtung aus einer Klemmschraube (5) und einer in dem Langloch verschiebbar und verdrehsicher geführten Klemmutter (8) besteht.

3. Absperrklappe nach Anspruch 1 oder 2, dadurch gekennzeichnet, daß der Handhebel (3) mit einer Nase (6) versehen ist, durch die die Klemmschraube (5) führbar ist.

4. Absperrklappe nach Anspruch 3, dadurch gekennzeichnet, daß die Nase (6) lösbar mit dem Handhebel (3) verbunden ist.

5. Absperrklappe nach Anspruch 3, dadurch gekennzeichnet, daß die Nase (6) als nasenförmiger Ansatz angeformt ist.

6. Absperrklappe nach Anspruch 1, dadurch gekennzeichnet, daß das Langloch (7) in Nichtgebrauchsstellung durch eine Abdeckung verschlossen ist.

7. Absperrklappe nach Anspruch 6, bei der das Zwischenstück (2) als Spritzteil ausgebildet ist, dadurch gekennzeichnet, daß die Abdeckung als dünnwandige Sollbruchstelle gestaltet ist.

8. Absperrklappe nach Anspruch 1, dadurch gekennzeichnet, daß das Zwischenstück (2) auf ihrer den Rastöffnungen (4) gegenüberliegenden Seite einen kreisbogenförmigen Umfang beschreibt, dessen Radius bezogen auf die Drehachse des Handhebels (3) kleiner ist als der kreisbogenförmige Umfang im Bereich der Rastöffnungen (4).

9. Absperrklappe nach Anspruch 1, dadurch gekennzeichnet, daß im Bereich der Rastöffnungen eine Teilstrichskalierung (10) und im Bereich des Langloches (7) eine in Winkelbereiche unterteilte Skalierung (11) vorgesehen ist.

## Claims

1. A shut-off flap valve having a rotatable hand lever mounted on a stationary intermediate portion provided with detent openings, characterised in that the hand lever can be brought into a function as a clamping lever, wherein the intermediate portion (2) has an arcuate slot (7) in which a clamping device connected to the hand lever (3) is clampably guided.

2. A shut-off flap valve according to claim 1 characterised in that the clamping device comprises a clamping screw (5) and a clamping nut (8) which is slidably and non-rotatably guided in the slot.

3. A shut-off flap valve according to claim 1 or claim 2 characterised in that the hand lever (3) is provided with a nose (6) through which the clamping screw (5) can be passed.

4. A shut-off flap valve according to claim 3 characterised in that the nose (6) is releasably connected to the hand lever (3).

5. A shut-off flap valve according to claim 3 characterised in that the nose (6) is formed on the lever in the form of a nose-shaped projection.

6. A shut-off flap valve according to claim 1 characterised in that the slot (7) is closed by a cover means in the position of not being in use.

7. A shut-off flap valve according to claim 6 in which the intermediate portion (2) is in the form of an injection moulding, characterised in that the cover means is in the form of a thin-gauge desired-rupture location.

8. A shut-off flap valve according to claim 1 characterised in that on its side opposite to the detent openings (4) the intermediate portion (2) describes an arcuate circumference whose radius in relation to the axis of rotation of the hand lever (3) is smaller than the arcuate circumference in the region of the detent openings (4).

9. A shut-off flap valve according to claim 1 characterised in that a graduation scale (10) is provided in the region of the detent openings and a scale (11) which is subdivided into angular regions is provided in the region of the slot (7).

## Revendications

1. Robinet d'arrêt comportant un levier manuel tournant, qui est monté sur une pièce intermédiaire fixe pourvue d'ouvertures d'arrêt, caractérisé en ce que le levier manuel peut être amené dans une fonction de levier de serrage, la pièce intermédiaire (2) présentant un trou oblong (7) en forme d'arc de cercle, dans lequel un dispositif de serrage, relié au levier manuel (3), peut être guidé avec possibilité de serrage.

2. Robinet d'arrêt selon la revendication 1, caractérisé en ce que le dispositif de serrage est constitué d'une vis de serrage (5) et d'un écrou de serrage (8) pouvant coulisser dans le trou oblong et guidée de manière à ne pouvoir tourner.

3. Robinet d'arrêt selon la revendication 1 ou 2, caractérisé en ce que le levier manuel (3) est pourvu d'un ergot (6) par lequel la vis de serrage (5) peut être guidée.

4. Robinet d'arrêt selon la revendication 3, caractérisé en ce que l'ergot (6) est relié de manière non permanente au levier manuel (3).

5. Robinet d'arrêt selon la revendication 3, caractérisé en ce que l'ergot (6) est formé en tant qu'appendice en forme d'ergot.

6. Robinet d'arrêt selon la revendication 1, caractérisé en ce que le trou oblong (7) est fermé en position de non-utilisation par un couvercle.

7. Robinet d'arrêt selon la revendication 6, dans lequel la pièce intermédiaire (2) est réalisée en tant que pièce moulée par injection, caractérisé en ce que le couvercle est réalisé en tant qu'emplacement destiné la rupture, à paroi mince.

8. Robinet d'arrêt selon la revendication 1, caractérisé en ce que la pièce intermédiaire (2) décrit, sur son côté opposé aux ouvertures d'arrêt (4), un contour en forme d'arc de cercle dont le rayon, rapporté à l'axe de rotation du levier manuel (3), est plus petit que son contour en arc de cercle dans la région des ouvertures d'arrêt (4).

9. Robinet d'arrêt selon la revendication 1, caractérisé en ce qu'une échelle à traits de subdivision (10) est prévue dans la zone des ouvertures d'arrêt et une échelle (11) subdivisée en zones angulaires est prévue dans la région du trou oblong (7).
